# FASCICULE DE BREVET EUROPEEN

(11) **EP 1 854 299 B1**
(45) Date de publication et mention de la délivrance du brevet: **27.01.2010**
(21) Numéro de dépôt: 06709382.3
(22) Date de dépôt: 27.02.2006
(51) Int. Cl.: H04N 7/26

(54) **PROCEDE, DISPOSITIF ET SYSTEME DE TRAITEMENT D IMAGES SUCCESSIVES CODEES PAR BLOCS**
VERFAHREN, EINRICHTUNG UND SYSTEM ZUM VERARBEITEN VON SUKZESSIVEN BLOCKCODIERTEN BILDERN
METHOD, DEVICE AND SYSTEM FOR PROCESSING SUCCESSIVE BLOCK-CODED IMAGES

(30) Priorité: 28.02.2005 FR 0502012
(43) Date de publication de la demande: 14.11.2007
(73) Titulaire: Valeo Electronique et Systèmes de Liaison, 78180 Montigny le Bretonneux (FR)
(72) Inventeur: HUBERT, Vincent, F-95300 Pontoise (FR)
(74) Mandataire: de la Bigne, Guillaume Michel Marie
(86) Numéro de dépôt international: PCT/FR2006/000435
(87) Numéro de publication internationale: WO 2006/092485

(56) Documents cités:
- JP-A- 2004 187 075
- IMURA K ET AL: "Error resilient video coding schemes for real-time and low-bitrate mobile communications" SIGNAL PROCESSING. IMAGE COMMUNICATION, ELSEVIER SCIENCE PUBLISHERS, AMSTERDAM, NL, vol. 14, no. 6-8, mai 1999 (1999-05), pages 519-530, XP004165392 ISSN: 0923-5965
- LIAO J Y ET AL: "ADAPTIVE INTRA BLOCK UPDATE FOR ROBUST TRANSMISSION OF H.263" IEEE TRANSACTIONS ON CIRCUITS AND SYSTEMS FOR VIDEO TECHNOLOGY, IEEE INC. NEW YORK, US, vol. 10, no. 1, février 2000 (2000-02), pages 30-35, XP000906586 ISSN: 1051-8215
- WORRALL S T ET AL: "Motion adaptive intra refresh for MPEG-4" ELECTRONICS LETTERS, IEE STEVENAGE, GB, vol. 36, no. 23, 9 novembre 2000 (2000-11-09), pages 1924-1925, XP006015920 ISSN: 0013-5194
- MOCCAGATTA I ET AL: "ERROR-RESILIENT CODING IN JPEG-2000 AND MPEG-4" IEEE JOURNAL ON SELECTED AREAS IN COMMUNICATIONS, IEEE INC. NEW YORK, US, vol. 18, no. 6, juin 2000 (2000-06), pages 899-914, XP000933877 ISSN: 0733-8716
- SHIH-YU HUANG ET AL: "A LOW-COST DESKTOP VIDEOCONFERENCING CODEC: AN ADAPTIVE MOTION-JPEGDESIGN" IEEE TRANSACTIONS ON CONSUMER ELECTRONICS, IEEE INC. NEW YORK, US, vol. 40, no. 4, 1 novembre 1994 (1994-11-01), pages 944-950, XP000495835 ISSN: 0098-3063
- YAMAUCHI H ET AL: "1440 * 1080 pixel, 30 frames per second motion-JPEG 2000 codec for HD-movie transmission" IEEE JOURNAL OF SOLID-STATE CIRCUITS IEEE USA, vol. 40, no. 1, janvier 2005 (2005-01), pages 331-341, XP002351980 ISSN: 0018-9200

## Description

La présente invention concerne un procédé, un dispositif et un système de traitement d'images successives codées par blocs puis transmises en vue de leur stockage dans des moyens de mémorisation dont le contenu est susceptible, par exemple, d'être affiché ou traité afin de produire une information utile.

Plus précisément, l'invention concerne un procédé du type précité dans lequel chaque bloc codé puis transmis d'une image est associé à un taux d'erreur de transmission.

Ainsi, par exemple, JPEG 2000 est une norme qui permet le codage d'images fixes par blocs, et qui prévoit que chaque bloc codé puis transmis d'une image puisse être associé à un taux d'erreur de transmission.

D'autres normes, par exemple la norme JPEG ou des normes de compression vidéo telles que MPEG2 et MPEG4, permettent le codage d'images fixes (JPEG) ou de séquences d'images (MPEG 2 et 4) par blocs. Mais ces autres normes ne prévoient pas d'associer un taux d'erreur de transmission à chaque bloc codé puis transmis. Pour ces autres normes cependant, on peut prévoir le calcul supplémentaire d'un taux d'erreur pour chaque bloc à l'aide d'un code de redondance cyclique (code polynomial de type CRC) ajouté au flux binaire transmis.

Ainsi, il est connu de coder par de telles normes des images successives, de façon que chaque bloc codé puis transmis soit associé à un taux d'erreur de transmission.

On souhaite dans certains cas transmettre des images successives dans un environnement perturbé, par exemple :
- à l'intérieur d'un véhicule automobile, entre une caméra d'acquisition placée à l'arrière du véhicule et un écran de visualisation placé à proximité du conducteur, ou
- entre des véhicules automobiles.

Or, lorsque l'on veut transmettre des images successives dans un environnement perturbé, tel que celui d'un véhicule automobile, et que les moyens de transmission utilisés présentent une capacité limitée au regard du volume de données à transmettre, il faut envisager d'optimiser le codage des images transmises.

Les normes adaptées pour le codage et la transmission d'images vidéo, telles que MPEG2 et MPEG4, nécessitent des ressources assez importantes essentiellement du côté du codage et de façon moindre du côté du décodage. En effet, ces normes prévoient le codage d'images issues de calculs de différences entre images successives de la séquence vidéo. Ainsi, il est habituel que la transmission d'une image n'intervienne qu'après un temps de latence correspondant à l'acquisition de plusieurs images, par exemple six images, qui sont comparées entre elles pour permettre leur codage. Par conséquent, des moyens de calcul et de mémorisation conséquents sont nécessaires, en particulier du côté du codeur, faute de quoi le temps de codage des images dépasserait le temps de latence évoqué ci-dessus, au préjudice du temps de traitement global des images depuis leur acquisition jusqu'à leur stockage après transmission.

Les moyens de calcul et de mémorisation importants requis pour le codage et la transmission de données vidéo conformément aux normes MPEG2 et MPEG4 ne sont donc pas toujours adaptés à une implantation dans un véhicule automobile.

Les normes adaptées pour le codage et la transmission d'images fixes, telles que JPEG et JPEG 2000, évitent le temps de latence évoqué ci-dessus en permettant la compression des images d'une séquence vidéo indépendamment les unes des autres. Mais leur taux de compression est plus limité.

Dans tous les cas, la décompression d'un bloc codé d'image compressée présentant un taux d'erreur conséquent peut conduire à un dysfonctionnement des moyens de traitement du coté du décodeur.

L'invention a notamment pour but de fournir un procédé fiable de traitement d'images successives codées par blocs, compatible avec des moyens de traitement relativement limités au niveau des codage et décodage.

Il est également connu de la publication JP 2004 187075 un procédé de traitement d'images dans lequel des taux d'erreurs associés à une image stockée et une image reçue sont comparés, l'image comportant le taux le plus bas étant choisie pour être mise en place dans un fichier vidéo.

L'invention a donc pour objet un procédé de traitement d'images successives codées par blocs conforme à la revendication 1.

Ainsi, grâce à l'invention, seuls sont stockés les blocs d'une nouvelle image transmise dont le taux d'erreur de transmission est inférieur au taux d'erreur de transmission des blocs correspondants déjà stockés. Ceci permet d'éviter le stockage d'une image altérée et, le cas échéant, de décompresser un bloc d'image compressée comportant un taux d'erreur trop important.

L'invention permet donc de maîtriser la qualité d'une image stockée notamment en vue de son affichage. Le cas échéant, l'invention permet également d'éviter de décompresser un bloc d'image altérée et donc d'éviter un risque de dysfonctionnement des moyens de traitement du coté du décodeur.

L'augmentation du taux d'erreur de transmission des blocs stockés est généralement appelée "facteur de vieillissement".

Le facteur de vieillissement permet de tenir compte du fait que les images successives transmises correspondent à une vidéo animée dans laquelle le contenu évolue.

Ainsi, il est possible d'ajuster le facteur de vieillissement de chaque bloc de l'image stockée en fonction du nombre d'images transmises par unité de temps.

Avantageusement, l'augmentation du taux d'erreur de transmission du bloc stocké dépend de mouvements détectés entre images successives.

Ainsi, il est possible d'ajuster le rafraîchissement des blocs de l'image stockée en fonction de l'activité détectée dans la séquence vidéo faisant l'objet de la transmission d'images successives. En effet, lorsque les images successives évoluent lentement les unes par rapport aux autres, la probabilité d'avoir un bloc de pixels différent d'une image à l'autre est faible, ce qui n'est pas le cas pour une séquence d'images évoluant rapidement.

Dans ce cas, selon deux modes de réalisation possibles de l'invention :
- le taux d'erreur de transmission du bloc stocké peut-être augmenté par l'ajout d'une valeur prédéterminée à chaque transmission d'un nouveau bloc correspondant ; ou
- le taux d'erreur de transmission du bloc stocké peut-être augmenté par multiplication avec un coefficient prédéterminé à chaque transmission d'un nouveau bloc correspondant.

De préférence, les images successives sont codées chacune à l'aide d'un procédé de codage par blocs d'images fixes.

En effet, comme indiqué précédemment, les normes de codage par blocs d'images fixes, telles que JPEG ou JPEG 2000, n'engendrent pas de temps de latence au niveau du codeur et requièrent dés moyens de traitement relativement limités au niveau des codeur et décodeur.

On notera qu'un bloc peut correspondre par exemple :
- à un ensemble de pixels à deux dimensions, les pixels étant dans ce cas répartis en ligne ou fraction de ligne de l'image et en colonne ou fraction de colonne de l'image, comme le propose par exemple la norme JPEG ;
- à un ensemble de pixels à une dimension, les pixels étant dans ce cas répartis en une seule ligne ou fraction de ligne de l'image ou bien en une seule colonne ou fraction de colonne de l'image ; ou encore
- à un ensemble de pixels dispersés dans l'image.

L'invention concerne également un dispositif de traitement d'images successives conforme à l'une des revendications 6 à 8.

De façon optionnelle, un dispositif de traitement d'images selon l'invention peut comporter un module logiciel.

En effet, la fonction de remplacement sous condition des blocs stockés par les nouveaux blocs transmis, peut-être aisément implémentée à l'aide d'un module logiciel.

En variante, un dispositif de traitement d'images selon l'invention peut comporter un circuit intégré à application spécifique du type ASIC (Application Specific Integrated Circuit, conformément à la terminologie anglo-saxonne).

Enfin, l'invention concerne également un système de traitement d'images successives conforme à la revendication 9.

L'invention sera mieux comprise à l'aide de la description qui va suivre, donnée uniquement à titre d'exemple et faite en se référant aux dessins annexés dans lesquels :
- la figure 1 représente schématiquement une installation comprenant un système de traitement d'images selon l'invention ;
- la figure 2 représente les étapes successives d'un procédé de traitement d'images mis en oeuvre par l'installation de la figure 1.

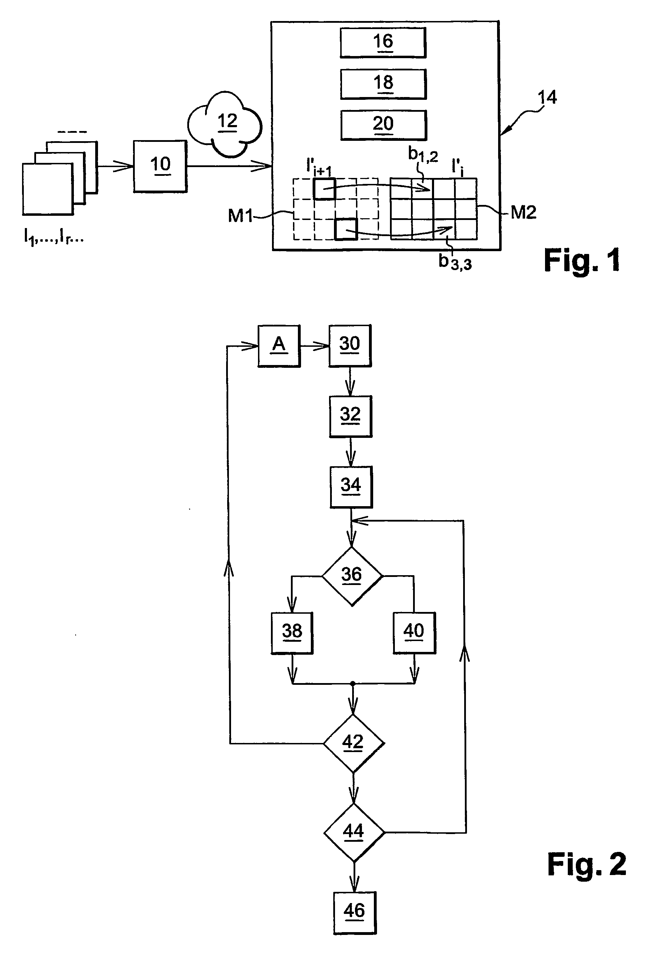

On a représenté sur la figure 1 une installation complète de codage, transmission, décodage et stockage après transmission d'images numériques successives I₁,..., Iₙ,....

Ces images successives sont par exemple des images composant une séquence vidéo complète.

De préférence, les images successives sont codées à l'aide d'un procédé de codage d'images fixes par blocs. Il peut s'agir par exemple d'un procédé de codage conforme à la norme JPEG 2000, qui prévoit le codage d'images fixes par blocs, notamment afin de compresser ces images, et le calcul pour chaque bloc d'un taux d'erreur de transmission du bloc.

Il peut s'agir également d'un procédé de codage conforme à une autre norme de codage d'images par blocs qui ne prévoit pas le calcul d'un taux d'erreur de transmission de chaque bloc. Dans ce cas, le procédé de codage peut être complété par un procédé de calcul d'un tel taux d'erreur de transmission par bloc à l'aide d'un codage redondant (code CRC par exemple).

Ainsi, l'installation représentée sur la figure 1 comporte un codeur 10 apte à mettre en oeuvre l'un des procédés de codage précités, pour le codage par blocs des images I₁,..., Iₙ,....

Les images successives codées par blocs à l'aide du codeur 10 sont transmises à un récepteur sous la forme d'un flux binaire. Ce flux est véhiculé par l'intermédiaire d'un réseau 12, par exemple un réseau de transmission de données sans fil.

Le récepteur est muni d'un système 14 de traitement des images successives transmises. Ce système 14 comporte :
- une mémoire M1 pour le stockage d'une partie au moins du flux binaire à traiter,
- une mémoire M2 pour le stockage d'au moins une image après traitement, dite image stockée I'ᵢ, le contenu de la mémoire M2 étant susceptible, par exemple, d'être affiché ou traité afin de produire une information utile,
- un décodeur 16 apte à décoder chaque bloc de chaque image transmise et à calculer le taux d'erreur de transmission associé à chaque bloc,
- des moyens 18 de sélection de blocs devant faire l'objet d'un remplacement, dans une image stockée I'ᵢ, et
- des moyens 20 de remplacement des blocs sélectionnés dans l'image stockée.

Le décodeur 16 ainsi que les moyens de sélection 18 et de remplacement 20 sont par exemple implémentés de façon logicielle ou programmés dans un microprocesseur du système de traitement 14.

En variante, le décodeur 16 ainsi que les moyens de sélection 18 et de remplacement 20 peuvent être intégrés dans un circuit intégré à application spécifique du type ASIC (Application Specific Integrated Circuit, conformément à la terminologie anglo-saxonne).

Ainsi, lors de la réception d'un bloc d'une nouvelle image I'ᵢ₊₁, les moyens de sélection 18 comparent le taux d'erreur de transmission de ce bloc de la nouvelle image reçue I'ᵢ₊₁ avec le taux d'erreur de transmission du bloc correspondant de l'image stockée I'ᵢ. Cette comparaison permet aux moyens 18 de sélectionner les blocs devant être remplacés dans l'image stockée I'ᵢ, c'est-à-dire les blocs stockés pour lesquels le taux d'erreur de transmission est supérieur ou égal au taux d'erreur de transmission du nouveau bloc transmis correspondant. Dans l'exemple représenté sur la figure 1, les blocs b_{1,2'} b_{3,3} de l'image stockée I'ᵢ sont remplacés.

Pour tenir compte de l'évolution du contenu dans les images successives d'une séquence vidéo, le taux d'erreur de transmission des blocs stockés peut-être augmenté à chaque transmission des nouveaux blocs correspondants, c'est-à-dire à chaque transmission d'une nouvelle image.

Le taux d'erreur de transmission d'un bloc stocké est par exemple augmenté par l'ajout d'une valeur prédéterminée à chaque transmission d'un nouveau bloc correspondant. Cette valeur peut tenir compte de l'activité détectée dans la séquence vidéo.
Ainsi, si l'on fixe à 2% cette valeur prédéterminée, dans le cas d'un bloc stocké ne présentant pas d'erreur initiale et d'une transmission des blocs correspondants suivants avec 10 % d'erreur (ce taux peut bien évidemment être variable d'une image à l'autre) à chaque nouvelle image reçue, la valeur de 2 % est ajoutée au taux d'erreur de transmission du bloc stocké, selon le tableau suivant :

| Image reçue I' | Taux d'erreur de transmission du bloc affiché | Taux d'erreur de transmission du nouveau bloc reçu | Choix de rafraîchir le bloc |
|---|---|---|---|
| i + 1 | 2 % (bloc x / image i) | 10 % | Non |
| i + 2 | 4 % (bloc x / image i) | 10 % | Non |
| i + 3 | 6 % (bloc x / image i) | 10 % | Non |
| i + 4 | 8 % (bloc x / image i) | 10 % | Non |
| i + 5 | 10 % (bloc x / image i) | 10 % | Oui |
| i + 6 | 12 % (bloc x / image i) | 10 % | Oui |
| i + 7 | 12 % (bloc x / image i+6) | etc. | etc. |

Dans un mode de réalisation possible de l'invention, l'installation décrite précédemment met en oeuvre un procédé tel que représenté sur la figure 2.

On considère initialement qu'une image I'ᵢ est stockée dans la mémoire M2.

Lors d'une première étape A, on acquiert une image Iᵢ₊₁ à l'aide par exemple d'une caméra classique.

Lors d'une étape 30 suivante, on code au moins un bloc de l'image acquise Iᵢ₊₁ à l'aide du codeur 10.

Lors d'une étape 32 suivante, le bloc codé est transmis, par l'intermédiaire du réseau 12, sous la forme d'un flux binaire reçu par le système de traitement 14 dans la mémoire M1.

Lors de l'étape 34 suivante, le décodeur 16 du système de traitement 14 décode le flux binaire reçu, notamment le taux d'erreur de transmission de chaque bloc codé et transmis de chaque image.

Puis, pour chaque bloc transmis, on détermine si le bloc correspondant stocké doit être remplacé par le nouveau bloc transmis, en fonction de la comparaison du taux d'erreur de transmission du bloc stocké avec le taux d'erreur de transmission du nouveau bloc transmis. Pour cela, on exécute en boucle les étapes suivantes :
- lors d'une étape de test 36, on détermine, à l'aide des moyens de sélection 18, si le taux d'erreur de transmission du bloc stocké correspondant au nouveau bloc transmis est supérieur ou égal au taux d'erreur de transmission de ce nouveau bloc transmis ;
- si c'est le cas, on passe à une étape 38 lors de laquelle on remplace, à l'aide des moyens 20, le bloc stocké par le nouveau bloc transmis correspondant, après avoir, le cas échéant, décompressé ce bloc transmis ;
- si ce n'est pas le cas, on conserve, dans l'image I'ᵢ, le bloc stocké correspondant au nouveau bloc transmis et, éventuellement, on augmente lors d'une étape d'incrémentation 40, le taux d'erreur de transmission de ce bloc stocké ;
- puis, lors d'une étape de test 42, on examine l'opportunité de requérir l'acquisition d'une nouvelle image Iᵢ₊₂, avant même d'avoir terminé le traitement de la dernière image transmise I'ᵢ₊₁, par exemple si trop de blocs de cette dernière image transmise I'ᵢ₊₁ comportent des taux d'erreur élevés,
- s'il est opportun de requérir une nouvelle image, on revient à la première étape A,
- sinon, on passe à une étape de test 44 lors de laquelle on examine si le dernier bloc reçu est le dernier bloc de l'image transmise I'ᵢ₊₁ ;
- si c'est le cas, on passe à une étape 46 de sortie de boucle, lors de laquelle on se met en attente de la réception d'un premier bloc d'une nouvelle image transmise I'ᵢ₊₂ ;
- sinon, on revient à l'étape de test 36 pour le traitement d'un bloc suivant de l'image transmise I'ᵢ₊₁.

Il apparaît clairement qu'un système de traitement d'images tel que décrit précédemment permet d'éviter le stockage d'une image altérée et, le cas échéant, de décompresser un bloc d'image compressée comportant un taux d'erreur trop important. On évite ainsi de créer un dysfonctionnement des moyens de traitement du coté du décodeur en décompressant un bloc d'image altéré.

Un tel système de traitement d'images est particulièrement bien adapté à des applications de transmission d'images dans un environnement perturbé, par exemple à l'intérieur d'un véhicule automobile, entre une caméra d'acquisition placée à l'arrière du véhicule et un écran de visualisation placé à proximité du conducteur, ou par exemple entre des véhicules automobiles.

On notera que l'invention n'est pas limitée au mode de réalisation décrit précédemment.

Ainsi, en variante, on peut notamment augmenter le taux d'erreur de transmission de chaque bloc stocké par multiplication de ce taux avec un coefficient prédéterminé (strictement supérieur à 1) au lieu de l'augmenter par l'ajout d'une valeur prédéterminée.

## Revendications

1. Procédé de traitement d'images successives (I₁, ..., I_{n,} ...) codées par blocs puis transmises en vue de leur stockage, dans lequel chaque bloc codé (30) puis transmis (32) d'une image est associé à un taux d'erreur de transmission calculé à la réception du bloc, **caractérisé en ce qu'**on remplace (38) un bloc stocké (b₁.₂, b_{3.3}) par un nouveau bloc transmis correspondant au bloc stocké, uniquement si (36) le taux d'erreur de transmission du bloc stocké est supérieur ou égal au taux d'erreur de transmission du nouveau bloc transmis, le taux d'erreur de transmission d'un bloc stocké étant augmenté (40) à chaque transmission d'un nouveau bloc correspondant.

2. Procédé de traitement d'images selon la revendication précédente, dans lequel l'augmentation du taux d'erreur de transmission du bloc stocké dépend de mouvements détectés entre images successives (I₁, ..., Iₙ, ...)

3. Procédé de traitement d'images selon l'une quelconque des revendications précédentes, dans lequel le taux d'erreur de transmission du bloc stocké est augmenté par l'ajout d'une valeur prédéterminée à chaque transmission d'un nouveau bloc correspondant.

4. Procédé de traitement d'images selon l'une quelconque des revendications 1 ou 2, dans lequel le taux d'erreur de transmission du bloc stocké est augmenté par multiplication avec un coefficient prédéterminé à chaque transmission d'un nouveau bloc correspondant.

5. Procédé de traitement d'images selon l'une quelconque des revendications précédentes, dans lequel les images successives (I₁, ..., Iₙ, ...) sont codées chacune à l'aide d'un procédé de codage par blocs d'images fixes.

6. Dispositif (17) de traitement d'images successives (I₁, ..., Iₙ, ...) codées par blocs puis transmises en vue de leur stockage, chaque bloc codé puis transmis d'une image étant associé à un taux d'erreur de transmission calculé à la réception du bloc, **caractérisé en ce qu'**il comporte des moyens (20) de remplacement d'un bloc stocké (b_{1,2}, b_{3,3}) par un nouveau bloc transmis correspondant au bloc stocké, uniquement si le taux d'erreur de transmission du bloc stocké est supérieur ou égal au taux d'erreur de transmission du nouveau bloc transmis et des moyens d'augmentation du taux d'erreur de transmission du bloc stocké, à chaque transmission d'un nouveau bloc correspondant.

7. Dispositif (17) de traitement d'images selon la revendication précédente, comportant un module logiciel (20) comprenant des instructions logicielles pour commander l'exécution du remplacement d'un bloc stocké (b_{1,2}, b_{3,3}) par un nouveau bloc transmis correspondant au bloc stocké, uniquement si le taux d'erreur de transmission du bloc stocké est supérieur ou égal au taux d'erreur de transmission du nouveau bloc transmis, et pour commander l'augmentation du taux d'erreur du bloc stocké à chaque transmission d'un nouveau bloc correspondant.

8. Dispositif (17) de traitement d'images selon la revendication 6, comportant un circuit intégré à application spécifique du type ASIC pour commander l'exécution du remplacement d'un bloc stocké (b_{1,2}, b_{3,3}) par un nouveau bloc transmis correspondant au bloc stocké, uniquement si le taux d'erreur de transmission du bloc stocké est supérieur ou égal au taux d'erreur de transmission du nouveau bloc transmis, et pour commander l'augmentation du taux d'erreur du bloc stocké à chaque transmission d'un nouveau bloc correspondant.

9. Système (14) de traitement d'images successives codées par blocs puis transmises en vue de leur stockage, dans lequel chaque bloc codé puis transmis d'une image est associé à un taux d'erreur de transmission calculé à la réception du bloc, comportant :
- un décodeur (16) apte à décoder chaque bloc de chaque image transmise et à calculer chaque taux d'erreur de transmission associé à chaque bloc ;
- un dispositif (17) de traitement d'images selon l'une quelconque des revendications 6 à 8.

## Claims

1. A method of processing successive images (I₁, ..., Iₙ) that are block coded and then transmitted for storage purposes, in which each coded (30) and then transmitted (32) block of an image is associated with a transmission error rate calculated on reception of the block, the method being **characterized in that** a stored block (b_{1.2}, b_{3.3}) is replaced (38) by a new transmitted block corresponding to the stored block, only if (36) the transmission error rate of the stored block is greater than or equal to the transmission error rate of the new transmitted block, the transmission error rate of a stored block being increased (40) on each transmission of a new corresponding block.

2. An image processing method according to the preceding claim, wherein the increase in the transmission error rate of the stored block depends on movements detected between successive images (I₁, ..., Iₙ, ...).

3. An image processing method according to either preceding claim, wherein the transmission error rate of the stored block is increased by adding a predetermined value on each transmission of a new corresponding block.

4. An image processing method according to claim 1 or claim 2, wherein the transmission error rate of the stored block is increased by multiplying by a predetermined coefficient on each transmission of a new corresponding block.

5. An image processing method according to any preceding claim, wherein the successive images (I₁, ..., Iₙ, ...) are each encoded with the help of a block-coding method for still images.

6. A device (17) for processing successive images (I₁, ..., Iₙ, ...) that are coded by blocks and then transmitted for storage purposes, each coded and then transmitted block of an image being associated with a transmission error rate calculated on reception of the block, the device being **characterized in that** it includes means (20) for replacing a stored block (b_{1.2}, b_{3.3}) by a transmitted block corresponding to the stored block, only if the transmission error rate of the stored block is greater than or equal to the transmission error rate of the new transmitted block, and means for increasing the transmission error rate of the stored block on each transmission of a new transmitted block.

7. An image device (17) according to the preceding claim, including a software module (20) having software instructions for controlling the execution of the replacement of a stored block (b_{1.2}, b_{3.3}) by a new transmitted block corresponding to the stored block, only if the transmission error rate of the stored block is greater than or equal to the transmission error rate of the new transmitted block, and for controlling increasing the error rate of the stored block on each transmission of a new corresponding block.

8. An image processing device (17) according to claim 6, including an application specific integrated circuit (ASIC) for controlling the execution of the replacement of a stored block (b_{1.2}, b_{3.3}) by a new transmitted block corresponding to the stored block, only if the transmission error rate of the stored block is greater than or equal to the transmission error rate of the new transmitted block, and for controlling increasing the error rate of the stored block on each transmission of a new corresponding block.

9. A system (14) for processing successive images that are coded in blocks and then transmitted for storage purposes, in which each coded and then transmitted block of an image is associated with a transmission error rate calculated on reception of the block, the system comprising:
· a decoder (16) suitable for decoding each block of each transmited image and for calculating each transmission error rate associated with each block; and
· an image processing device (17) according to any one of claims 6 to 8.

## Patentansprüche

1. Verfahren zur Verarbeitung aufeinanderfolgender Bilder (I₁, ..., Iₙ, ...), die blockcodiert, dann übertragen worden sind, zwecks ihrer Speicherung, bei welchem jeder codierte (30), dann übertragene (32) Block eines Bildes assoziiert wird mit einer beim Empfang des Blocks berechneten Übertragungsfehlerrate, **dadurch gekennzeichnet, dass** ein gespeicherter Block (b_{1,2}, b_{3,3}) durch einen übertragenen neuen Block, der dem gespeicherten Block entspricht, nur dann ersetzt wird (38), wenn (36) die Übertragungsfehlerrate des gespeicherten Blocks größer oder gleich der Übertragungsfehlerrate des übertragenen neuen Blocks ist, wobei die Übertragungsfehlerrate eines gespeicherten Blocks erhöht wird (40) bei jeder Übertragung eines neuen, entsprechenden Blocks.

2. Verfahren zur Bildverarbeitung nach dem vorstehenden Anspruch, bei welchem die Erhöhung der Übertragungsfehlerrate des gespeicherten Blocks von detektierten Bewegungen zwischen aufeinanderfolgenden Bildern (I₁, ..., Iₙ, ...) abhängt.

3. Verfahren zur Bildverarbeitung nach einem der vorstehenden Ansprüche, bei welchem die Übertragungsfehlerrate des gespeicherten Blocks erhöht wird durch das Hinzuzählen eines vorgegebenen Werts bei jeder Übertragung eines neuen, entsprechenden Blocks.

4. Verfahren zur Bildverarbeitung nach Anspruch 1 oder 2, bei welchem die Übertragungsfehlerrate des gespeicherten Blocks erhöht wird durch Multiplikation mit einem vorgegebenen Koeffizienten bei jeder Übertragung eines neuen, entsprechenden Blocks.

5. Verfahren zur Bildverarbeitung nach einem der vorstehenden Ansprüche, bei welchem die aufeinanderfolgenden Bilder (I₁ ..., Iₙ, ...) jeweils codiert werden mit Hilfe eines Verfahrens zur Blockcodierung von Standbildern.

6. Vorrichtung (17) zur Verarbeitung aufeinanderfolgender Bilder (I₁, ..., Iₙ, ...), die blockcodiert, dann übertragen worden sind, zwecks ihrer Speicherung, bei welcher jeder codierte, dann übertragene Block eines Bildes assoziiert wird mit einer beim Empfang des Blocks berechneten Übertragungsfehlerrate, **dadurch gekennzeichnet, dass** sie Mittel (20) aufweist, die einen gespeicherten Block (b_{1,2}, b_{3,3}) durch einen übertragenen neuen Block, der dem gespeicherten Block entspricht, nur dann ersetzen, wenn die Übertragungsfehlerrate des gespeicherten Blocks größer oder gleich der Übertragungsfehlerrate des übertragenen neuen Blocks ist, und Mittel zur Erhöhung der Übertragungsfehlerrate des gespeicherten Blocks bei jeder Übertragung eines neuen, entsprechenden Blocks.

7. Vorrichtung (17) zur Bildbearbeitung nach dem vorstehenden Anspruch, welche ein Softwaremodul (20) aufweist, welches Softwareanweisungen umfasst, um die Ausführung der Ersetzung eines gespeicherten Blocks (b_{1,2}, b_{3,3}) durch einen übertragenen neuen Block, der dem gespeicherten Block entspricht, nur dann zu befehlen, wenn die Übertragungsfehlerrate des gespeicherten Blocks größer oder gleich der Übertragungsfehlerrate des übertragenen neuen Blocks ist, und um die Erhöhung der Übertragungsfehlerrate des gespeicherten Blocks bei jeder Übertragung eines neuen, entsprechenden Blocks zu befehlen.

8. Vorrichtung (17) zur Bildverarbeitung nach Anspruch 6, welche eine Anwendungsspezifische Integrierte Schaltung (ASIC) aufweist, um die Ausführung der Ersetzung eines gespeicherten Blocks (b_{1,2}, b_{3,3}) durch einen übertragenen neuen Block, der dem gespeicherten Block entspricht, nur dann zu befehlen, wenn die Übertragungsfehlerrate des gespeicherten Blocks größer oder gleich der Übertragungsfehlerrate des übertragenen neuen Blocks ist, und um die Erhöhung der Übertragungsfehlerrate des gespeicherten Blocks bei jeder Übertragung eines neuen, entsprechenden Blocks zu befehlen.

9. System (14) zur Verarbeitung aufeinanderfolgender Bilder, die blockcodiert, dann übertragen worden sind, zwecks ihrer Speicherung, bei welchem jeder codierte, dann übertragene Block eines Bildes assoziiert wird mit einer beim Empfang des Blocks berechneten Übertragungsfehlerrate, wobei das System aufweist:
- einen Decoder (16), welcher jeden Block jedes übertragenen Bildes decodieren und jede mit jedem Block assoziierte Übertragungsfehlerrate berechnen kann;
- eine Vorrichtung (17) zur Bildverarbeitung nach einem der Ansprüche 6 bis 8.
